# EUROPEAN PATENT APPLICATION

(11) **EP 3 471 040 A1**
(43) Date of publication of application: **17.04.2019**
(21) Application number: 18198264.6
(22) Date of filing: 02.10.2018
(51) Int. Cl.: G06Q 20/32

(54) **AUTOMATED VEHICLE BUSINESS-INTERACTION SYSTEM**

(30) Priority: 12.10.2017 US 201715782243
(71) Applicant: Aptiv Technologies Limited, St. Michael (BB)
(72) Inventor: LAUR, Michael, H, Mission Viejo, California 92692 (US); PITAMBARE, Uday S, Mountain View, California 94040 (US); AGARWAL, Divya, Sunnyvale, California 94086 (US); VIJAYAN, Indu, Sunnyvale, California 94086 (US); HILNBRAND, Brian, R, Mountain View, California 94043 (US); MANGAL, Nandita, Palo Alto, California 94301 (US); NG, Rachel, San Francisco, California 94107 (US)
(74) Representative: Robert, Vincent

(57) **Abstract**

A business-interaction system (10) for an automated vehicle includes a memory (18), a communications-device (26), and a controller (30). The memory (18) is configured to store interaction-information (20) of a business (24) approached by a host-vehicle (12). The communications-device (26) is configured to convey a transaction (22) between the business (24) and a director (28) of the host-vehicle (12). The controller (30) is configured to operate the host-vehicle (12) in accordance with the interaction-information (20). As such, the director (28) is able to conduct the transaction (22).

## Description

### TECHNICAL FIELD OF INVENTION

This disclosure generally relates to a business-interaction system for an automated vehicle, and more particularly relates to a system that operates a host-vehicle in accordance with interaction-information that is indicative of how to conduct a business transaction so that a director (e.g. operator or passenger) is able to conduct the transaction.

### BACKGROUND OF INVENTION

It is known for an automated vehicle to be programmed to navigate to a destination in an automated manner. However, the same degree of automation is not available for business transactions that involve the use of the automated vehicle, business transactions such as visiting a fast-food business establishment.

### SUMMARY OF THE INVENTION

Described herein is a business-interaction system that assists with the operating of a host-vehicle with varying levels of automation to conduct business with an establishment to, for example, pick up food, conduct the ordering process, accomplishing the payment aspect of the transaction, receiving information from the business establishment to navigate the property of the business establishment, and receiving information from the business to enable suitable drop off and pickup locations, which may take into consideration passenger needs and preferred destinations and traffic conditions.

In accordance with one embodiment, a business-interaction system for an automated vehicle is provided. The system includes a memory, a communications-device, and a controller. The memory is configured to store interaction-information of a business approached by a host-vehicle. The communications-device is configured to convey a transaction between the business and a director of the host-vehicle. The controller is configured to operate the host-vehicle in accordance with the interaction-information. As such, the director is able to conduct the transaction.

The communications-device may be configured to access the memory to retrieve the interaction-information. The interaction-information may include a lane-model that indicates how the host-vehicle should maneuver to conduct the transaction. The interaction-information may include a menu of products available from the business. The interaction-information may include a payment-method to purchase a product from the business. The transaction may include receiving a service from the business.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a diagram of a business-interaction system in accordance with one embodiment; and
Fig. 2 is a scenario encountered by the system of Fig. 1 in accordance with one embodiment.

### DETAILED DESCRIPTION

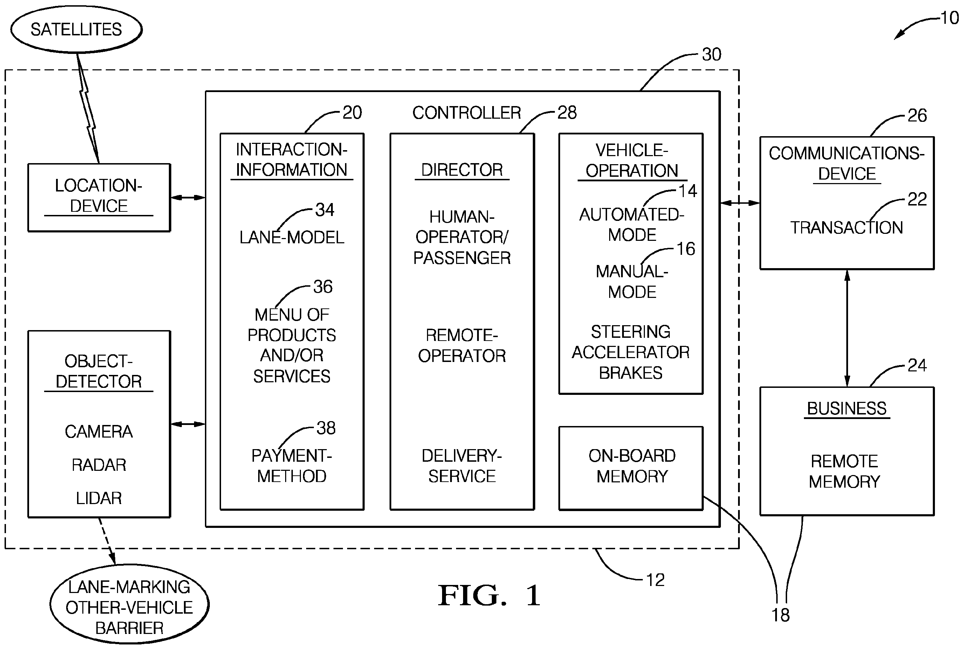

Fig. 1 illustrates a non-limiting example of a business-interaction system, hereafter referred to as the system 10, which is generally intended for use by an automated vehicle, e.g. a host-vehicle 12. As used herein, the term automated vehicle may apply to instances when the host-vehicle 12 is being operated in an automated-mode 14, i.e. a fully autonomous mode, where a human-operator (not shown) of the host-vehicle 12 may do little more than designate a destination or objective of travel in order to operate the host-vehicle 12. However, full automation is not a requirement. It is contemplated that the teachings presented herein are useful when the host-vehicle 12 is operated in a manual-mode 16 where the degree or level of automation may be little more than providing audible and/or visual guidance to the human-operator who is generally in control of the steering, accelerator, and brakes of the host-vehicle 12. It may also be possible that the host vehicle 12 may not have a human passenger in which case the operator is the controller 30.

As will be explained in more detail below, the system 10 described herein provides a means to automate some or all aspects of an interaction or transaction between a person and a business. Accordingly, the teachings presented herein are useful for helping to conduct a business-transaction when the host-vehicle 12 is fully autonomous, with or without a passenger/operator present in the host-vehicle 12, or when the host-vehicle 12 manually-driven with partial automation of the business-transaction. For example, while the host-vehicle 12 is being operated in the manual-mode 16, the system 10 may only assist the human-operator to place an order at a fast-food establishment. By contrast, it is contemplated that the host-vehicle 12 can be operated in the automated-mode 14 to travel to the same fast-food establishment, without any person present in the host-vehicle 12, to order and/or pick up food and return the food-order to a place of employment of a person who owns or has directed the host-vehicle 12 to execute such a task.

The system 10 includes a memory 18, which may include or be formed of on-board and/or remote memory, i.e. memory that stores information 'in-the-cloud'. By way of example and not limitation, the memory 18 may be nonvolatile memory such as electrically erasable programmable read-only memory (EEPROM). The memory 18 is generally configured to store data characterized as interaction-information 20 that is related to conducting a transaction 22 (i.e. a business-transaction) with a business 24 that may be being approached by the host-vehicle 12. As will be explained in more detail below by way of non-limiting examples, the business 24 may be any type of business that could benefit from streamlining the manner in which any example of the transaction 22 is performed.

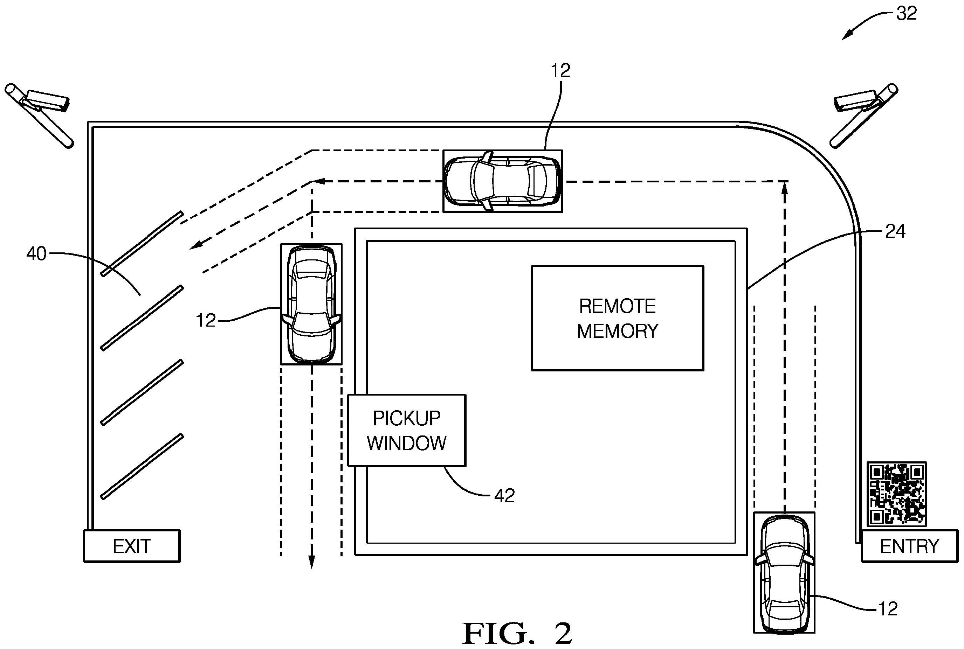

Fig. 2 illustrates a non-limiting example of a scenario 32 that may be encountered by the host-vehicle 12. By way of example and not limitation, the business 24 may be a restaurant that has a take-out or pickup window or accepts reservations only after a customer has arrived in the parking-lot of the restaurant. As another example, the business may be a zoo, amusement park, or movie theater with an automated payment procedure so the occupants of the host-vehicle 12 can enter the zoo, park, or theater without waiting to purchase tickets. The interaction-information 20 may include, but is not limited to, a lane-model 34 that guides the host-vehicle 12 to an available parking place, a menu 36 of food items available from the business (restaurant), a message from the business 24 that instructs the host-vehicle 12 to approach a drive-up or pickup window when the order is ready for pickup, and/or account numbers or other payment information so the business can be paid for the goods or services provided by the transaction 22.

Referring again to Fig. 1, the system 10 includes a communications-device 26 such as a wireless transceiver used for direct/short-range communications (DSRC) or a Wi-Fi transceiver that provides communications via the web. The communications-device 26 is generally configured to convey the transaction 22 (e.g. immediate purchase of product, order for later delivery, pay a monthly bill, or entry fee to enter the business) between the business 24 and a director 28 of the host-vehicle 12. As used herein, the director 28 may be, but is not limited to, a human-operator or passenger on-board the host-vehicle 12 that may be operating the host-vehicle 12 in the automated-mode 14, or a human manual-driver operating the host-vehicle 12 in the manual-mode 16, an off-board or remote operator who is not actually traveling in the host-vehicle 12 but has sent or is directing the host-vehicle 12 on an automated errand or a remote operator who is manually operating the host-vehicle 12 from a remote location as part of a delivery-service.

The system 10 includes a controller 30 that is in communication with the communications-device 26 and the memory 18. The communications may be by way of wires, optical cable, or wireless communications, as will be recognized by those in the art. The controller 30 may include a processor (not specifically shown) such as a microprocessor or other control circuitry such as analog and/or digital control circuitry including an application specific integrated circuit (ASIC) for processing data as should be evident to those in the art. The controller 30 may incorporate the memory 18; however this is not a requirement.

The controller 30 is generally configured to operate the host-vehicle 12, e.g. steer/brake/accelerate the host-vehicle 12 and/or operate a display (not shown) in the host-vehicle 12 that is viewable by an occupant of the host-vehicle 12, and do so in accordance with the interaction-information 20. With the assistance of the controller 30, the director 28 is able to conduct the transaction 22. In the case of operating the host-vehicle 12 in the manual-mode 16, the function of the controller 30 may be limited to exchanging information with the business 24 in accordance with a payment-method in order to pay for goods (e.g. a burger, fries, and a cola) verbally ordered by the director 28 who is manually operating the host-vehicle 12. In the case of operating the host-vehicle 12 in the automated-mode 14, the function of the controller 30 may perform all aspects of the transaction 22 including, but not limited to, placing the order based on what is on the menu, or what was previously ordered or usually ordered or preprogrammed into the controller 30, navigating the host-vehicle 12 to a pick-up window, and paying for the order in accordance with the payment-method 38.

The communications-device 26 may be configured to access the memory 18 to retrieve the interaction-information 20. For example, as suggested in Fig. 2, the business 24 may provide or house all or part of the memory 18 (e.g. the remote-memory) that can be accessed to upload the interaction-information 20 into the controller 30. While the communications-device 26 is shown as being separate from the host-vehicle 12, this is not a requirement. Those in the communication arts will recognize that part of the communications-device 26 may be in the host-vehicle 12, and part of the communications-device 26 may be in the business 24 so as to provide for direct two-way communication between the host-vehicle 12 and the business. Alternatively, the communication-device 26 may be part of the world-wide-web which is accessed from the host-vehicle 12 and the business 24 by any of several known methods such as Wi-Fi or a cellular-telephone network.

As previously suggested, the interaction-information 20 may include a lane-model 34 that indicates how or where the host-vehicle 12 should maneuver, travel, or traverse at or in the business to conduct the transaction 22. For example, the business 24 may direct or instruct the host-vehicle 12 to wait in a wait-zone 40 until what was ordered is ready for pickup, and then subsequently direct or instruct the host-vehicle 12 to approach a pickup window 42 so what was ordered can be placed in the host-vehicle 12.

As previously suggested, the interaction-information 20 may include a menu 36 of products and/or services available from the business 24. If the business 24 is a restaurant, then the menu 36 would list food items available from the restaurant. If instead the business 24 is an amusement park, the menu may indicate prices for various types or levels of entertainment. Alternatively, if the business 24 is a vehicle service center, the menu may list various services (e.g. oil change, tire rotation, car-wash, etc.) provided by the service center. If the host-vehicle 12 was previously serviced at the service center, the visit to the service center may have been previously scheduled so the type of service is already known. That is, the transaction 22 may include receiving a service from the business such as a car-wash, repair/maintenance facility, parking-lot, drive-in movie, amusement park, etc.

The interaction-information 20 may also include or specify a payment-method 38 to purchase a product/service from the business 24. The payment-method 38 may simply be to provide a credit card number and possibly a unique authorization code for the specific instance of the transaction 22. Alternatively, if what is being purchased from the business is relatively expensive, the payment-method 38 may include a loan authorization from a financial institution.

Accordingly, a business-interaction system (the system 10), a controller 30 for the system 10, and a method of operating the system 10 are provided. The various ways suggested herein by which a transaction 22 with a business 24 can be automated can speed up the transaction 22 and provide greater security for both the business 24 and the customer who is likely the director 28 of the host-vehicle 12.

While this invention has been described in terms of the preferred embodiments thereof, it is not intended to be so limited, but rather only to the extent set forth in the claims that follow.

## Claims

1. A business-interaction system (10) for an automated vehicle, said system (10) comprising:
a memory (18) configured to store interaction-information (20) of a business (24) approached by a host-vehicle (12);
a communications-device (26) configured to convey a transaction (22) between the business (24) and a director (28) of the host-vehicle (12); and
a controller (30) configured to operate the host-vehicle (12) in accordance with the interaction-information (20), whereby the director (28) is able to conduct the transaction (22).

2. The system (10) in accordance with claim 1, wherein the communications-device (26) is configured to access the memory (18) to retrieve the interaction-information (20).

3. The system (10) according to any one of the preceding claims, wherein the interaction-information (20) includes a lane-model (34) that indicates how the host-vehicle (12) should maneuver to conduct the transaction (22).

4. The system (10) according to any one of the claims 1 to 3, wherein the interaction-information (20) includes a menu (36) of products available from the business (24).

5. The system (10) according to any one of the claims 1 to 3, wherein the interaction-information (20) includes a payment-method (38) to purchase a product from the business (24).

6. The system (10) according to any one of the preceding claims, wherein the transaction (22) includes receiving a service from the business (24).
